# EUROPEAN PATENT APPLICATION

(11) **EP 4 412 324 A1**
(43) Date of publication of application: **07.08.2024**
(21) Application number: 22887344.4
(22) Date of filing: 15.09.2022
(51) Int. Cl.: H04W 52/34, H04W 52/36, H04W 52/14, H04W 12/06, H04W 88/06, H04B 1/3818

(54) **ELECTRONIC DEVICE COMPRISING MULTI-SIM**

(30) Priority: 27.10.2021 KR 20210144846; 01.12.2021 KR 20210170289
(71) Applicant: Samsung Electronics Co., Ltd., Suwon-si, Gyeonggi-do 16677 (KR)
(72) Inventor: HWANG, Nayoung, Suwon-si Gyeonggi-do 16677 (KR); PAIK, Minchull, Suwon-si Gyeonggi-do 16677 (KR)
(74) Representative: HGF
(86) International application number: PCT/KR2022/013796
(87) International publication number: WO 2023/075140

(57) **Abstract**

An electronic device according to an embodiment may include a modem supporting a first Subscriber Identification Module (SIM) for using a service of a 5^{th} Generation (5G) network of a first telecommunications operator and a second SIM for using a service of a 5G network of a second telecommunications operator, at least one first antenna electrically coupled to the modem and transmitting a first signal to a first base station of the first telecommunications operator through the first SIM, and at least one second antenna electrically coupled to the modem and transmitting a second signal to a second base station of the second telecommunications operator through the second SIM. The modem may transmit the first signal to the first base station with a first transmission power by using the at least one first antenna, and while the first signal is transmitted with the first transmission power, transmit the second signal to the second base station with a second transmission power by using the at least one second antenna, such that a sum of the first transmission power and the second transmission power is less than or equal to a predetermined maximum power.

Various other embodiments identified through the specification are possible.

## Description

### [Technical Field]

Various embodiments of the disclosure relate to an electronic device including a multi-Subscriber Identity Module (SIM).

### [Background Art]

Various electronic devices may use a network provided by each telecommunications company to perform wireless communication. Recent electronic devices may include at least two Subscriber Identity Modules (SIMs) to use at least two communication services.

Each SIM may include a unique International Mobile Subscriber Identity (IMSI) and key information which allows a user of the electronic device to be identified and authenticated by a service provider. An electronic device including a multi-SIM may allow the user to access various networks by using a plurality of SIMs.

An electronic device including a plurality of SIMs may support a Dual SIM Dual Active (DSDA) mode capable of using two communication services simultaneously and a Dual SIM Dual Standby (DSDS) mode capable of using only one communication service out of the two communication services.

In addition, portable electronic devices emit electromagnetic waves when used, and electronic devices released on the market are required to be designed such that a Specific Absorption Rate (SAR) defining a rate at which these electromagnetic waves are absorbed in a human body satisfies a specific standard.

### [Disclosure of Invention]

### [Technical Problem]

Conventional electronic devices are configured to control communication for network services provided by respective telecommunications operators by using two or more modems controlling respective SIMs. Accordingly, it may be difficult for each modem to recognize a power required in a network service controlled by another modem.

In addition, the conventional DSDA mode is configured to support a communication service of 4^{th} Generation (4G) (e.g., Long Term Evolution (LTE)) and 2^{nd} Generation (2G) (e.g., Global System for Mobile communication (GSM)). On the other hand, when 5G communication is supported through a plurality of SIMs, since only one SIM is enabled and supported among the plurality of SIMs as in the DSDS mode, it may be difficult to support 5G networks with the plurality of SIMs enabled at the same time.

Various embodiments of the disclosure may provide a power control method and an electronic device, in a state where a plurality of SIMs are enabled, wherein the electronic device includes the plurality of SIMs supporting respective network services provided by different telecommunications operators.

### [Solution to Problem]

An electronic device according to an embodiment may include a modem supporting a first Subscriber Identification Module (SIM) for using a service of a 5^{th} Generation (5G) network of a first telecommunications operator and a second SIM for using a service of a 5G network of a second telecommunications operator, at least one first antenna electrically coupled to the modem and transmitting a first signal to a first base station of the first telecommunications operator through the first SIM, and at least one second antenna electrically coupled to the modem and transmitting a second signal to a second base station of the second telecommunications operator through the second SIM. The modem may transmit the first signal to the first base station with a first transmission power by using the at least one first antenna, and while the first signal is transmitted with the first transmission power, transmit the second signal to the second base station with a second transmission power by using the at least one second antenna, such that a sum of the first transmission power and the second transmission power is less than or equal to a predetermined maximum power.

A power control method according to an embodiment may include receiving first information from a first base station which provides a service of a first 5G network through a first SIM and receiving second information from a second base station which provides a service of a second 5G network through a second SIM, determining a first transmission power of a first signal supporting the first 5G network, based on the first information, determining a second transmission power of a second signal supporting the second 5G network, based on the second information, such that a sum of the first transmission power and the second transmission power is less than or equal to a predetermined maximum power, and while the first signal is transmitted with the first transmission power through the first SIM, transmitting the second signal with the second transmission power through the second SIM.

An electronic device according to an embodiment may include a modem supporting a first SIM for using a service of a first 5G network and a second SIM for using a service of a second 5G network, at least one first antenna electrically coupled to the modem and transmitting a first signal supporting the first 5G network through the first SIM, and at least one second antenna electrically coupled to the modem and transmitting a second signal supporting the second 5G network through the second SIM. When the service of the second 5G network is used through the second SIM while using the service of the first 5G network through the first SIM, the modem may transmit a first power less than or equal to a predetermined maximum power to the at least one first antenna, and transmit a second power to the at least one second antenna such that a sum of the first power and the second power is less than or equal to the maximum power.

### [Advantageous Effects of Invention]

According to various embodiments of the disclosure, a transmission power may be controlled based on a priority in a state where a plurality of Subscriber Identity Modules (SIMs) supporting 5^{th} Generation (5G) network services provided by different telecommunications operators are enabled at the same time.

In addition, according to various embodiments, a transmission power for signals supporting different networks may be controlled to satisfy a Specific Absorption Rate (SAR) standard in a state where two or more SIMs are enabled.

In addition, according to various embodiments, a transmission power for signals supporting different networks may be controlled to satisfy a Power Class (PC) standard of 3^{rd} Generation Partnership Project (3GPP) in a state where two or more SIMs are enabled.

In addition thereto, various effects which are directly or indirectly understood through the disclosure may be provided.

### [Brief Description of Drawings]

FIG. 1 is a block diagram of an electronic device in a network environment, according to various embodiments;
FIG. 2 is a block diagram of an electronic device for supporting legacy network communication and 5^{th} Generation (5G) network communication, according to various embodiments;
FIG. 3 is a block diagram illustrating an electronic device according to an embodiment;
FIG. 4 is a flowchart illustrating a power control method of an electronic device according to an embodiment;
FIG. 5A illustrates a maximum power satisfying a Specific Absorption Rate (SAR) standard according to an embodiment;
FIG. 5B illustrates an operation in which a sum of a first transmission power and a second transmission power is determined to be less than or equal to the maximum power of FIG. 5A according to an embodiment;
FIG. 6A illustrates a maximum power satisfying a 3^{rd} Generation Partnership Project (3GPP) Power Class (PC) standard according to an embodiment; and
FIG. 6B illustrates an operation in which a sum of a first transmission power and a second transmission power is determined to be less than or equal to the maximum power of FIG. 6A according to an embodiment.

With regard to the description of the drawings, the same or similar reference numerals may be used to refer to the same or similar elements.

### [Mode for Carrying out the Invention]

Hereinafter, various embodiments of the disclosure are described with reference to the accompanying drawings. However, it should be appreciated that this is not intended to limit the technological features set forth herein to particular embodiments and include various modifications, equivalents, and/or alternatives for an embodiment of the disclosure.

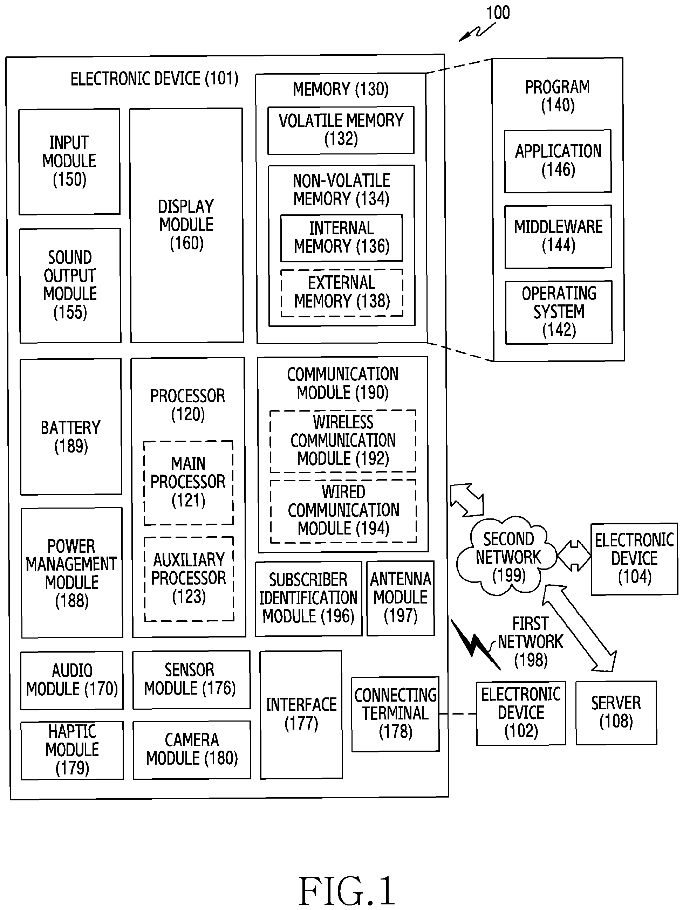

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

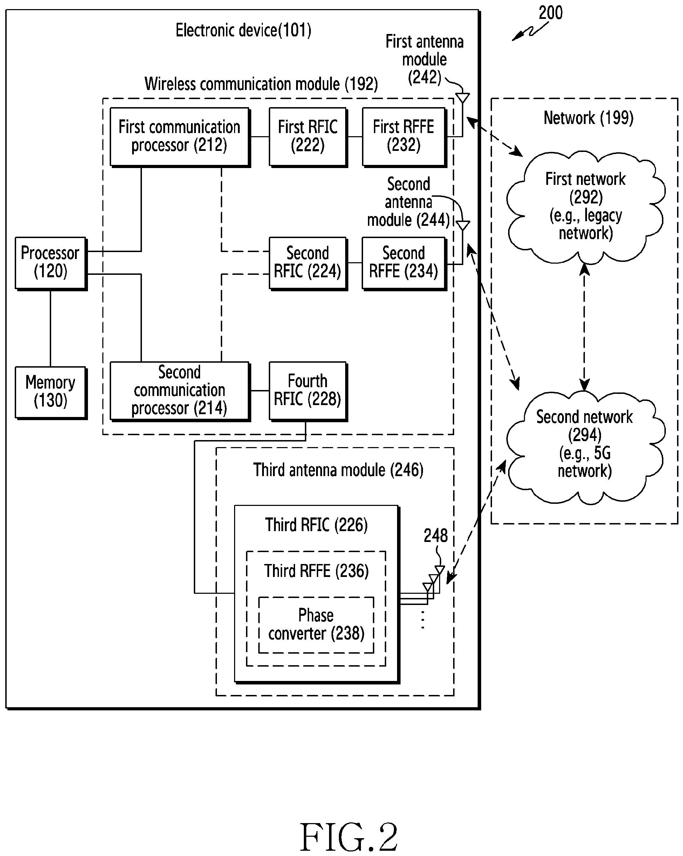

FIG. 2 is a block diagram 200 of the electronic device 101 for supporting legacy network communication and 5^{th} Generation (5G) network communication, according to various embodiments. Referring to FIG. 2, the electronic device 101 may include a first communication processor 212, a second communication processor 214, a first Radio Frequency Integrated Circuit (RFIC) 222, a second RFIC 224, a third RFIC 226, a fourth RFIC 228, a first Radio Frequency Front End (RFFE) 232, a second RFFE 234, a first antenna module 242, a second antenna module 244, and an antenna 248. The electronic device 101 may further include the processor 120 and the memory 130. The network 199 may include a first cellular network 292 and a second cellular network 294. According to another embodiment, the electronic device 101 may further include at least one component among the components of FIG. 1, and the network 199 may further include at least one different network. According to an embodiment, the first communication processor 212, the second communication processor 214, the first RFIC 222, the second RFIC 224, the fourth RFIC 228, the first RFFE 232, and the second RFFE 234 may constitute at least part of the wireless communication module 192. According to another embodiment, the fourth RFIC 228 may be omitted, or may be included as part of the third RFIC 226.

The first communication processor 212 may establish a communication channel of a band to be used in wireless communication with respect to the first network 292, and may support legacy network communication through the established communication channel. According to various embodiments, the first network may be a legacy network including 2^{nd} Generation (2G), 3^{rd} Generation (3G), 4^{th} Generation (4G), or Long Term Evolution (LTE) networks. The second communication processor 214 may establish a communication channel corresponding to a designed band (e.g., about 6GHz to about 60GHz) among bands to be used in wireless communication with respect to the second network 294, and may support 5G network communication through the established communication channel. According to various embodiments, the second network 294 may be a 5G network defined in 3GPP. In addition, according to an embodiment, the first communication processor 212 or the second communication processor 214 may establish a communication channel corresponding to another designated band (e.g., below about 6GHz) among bands to be used in wireless communication with respect to the second network 294. According to an embodiment, the first communication processor 212 and the second communication processor 214 may be implemented within a single chip or a single package. According to various embodiments, the first communication processor 212 or the second communication processor 214 may be constructed inside a single chip or a single package, together with the processor 120, the auxiliary processor 123, or the communication module 190.

In case of transmission, the first RFIC 222 may convert a baseband signal generated by the first communication processor 212 into a Radio Frequency (RF) signal of about 700MHz to about 3GHz used in the first network 292 (e.g., the legacy network). In case of reception, the RF signal may be acquired from the first network 292 (e.g., the legacy network) through an antenna (e.g., the first antenna module 242), and may be preprocessed through an RFFE (e.g., the first RFFE 232). The first RFIC 222 may convert the preprocessed RF signal into a baseband signal so as to be processed by the first communication processor 212.

In case of transmission, the second RFIC 224 may convert a baseband signal generated by the first communication processor 212 or the second communication processor 214 into an RF signal of a Sub6 band (e.g., below about 6GHz) (hereinafter, a 5G Sub6 RF signal) used in the second network 294 (e.g., the 5G network). In case of reception, the 5G Sub6 RF signal may be acquired from the second network 294 (e.g., the 5G network) through an antenna (e.g., the second antenna module 244), and may be preprocessed through an RFFE (e.g., the second RFFE 234). The second RFIC 224 may convert the preprocessed 5G Sub6 RF signal into a baseband signal so as to be processed by a corresponding communication processor, i.e., either the first communication processor 212 or the second communication processor 214.

The third RFIC 226 may convert a baseband signal generated by the second communication processor 214 into an RF signal of a 5G Above6 band (e.g., about 6GHz to about 60GHz) (hereinafter, a 5G Above 6 RF signal) to be used in the second network 294 (e.g., the 5G network). In case of reception, the 5G Above6 RF signal may be acquired from the second network 294 (e.g., the 5G network) through an antenna (e.g., the antenna 248), and may be preprocessed through the third RFFE 236. The third RFIC 226 may convert the preprocessed 5G Above6 RF signal into a baseband signal so as to be processed by the second communication processor 214. According to an embodiment, the third RFFE 236 may be constructed as part of the third RFIC 226.

According to an embodiment, the electronic device 101 may include the fourth RFIC 228, either separately or as part of the third RFIC 226. In this case, the fourth RFIC 228 may convert a baseband signal generated by the second communication processor 214 into an RF signal of an intermediate frequency band (e.g., about 9GHz to about 11GHz) (hereinafter, an IF signal), and thereafter may transfer the IF signal to the third RFIC 226. The third RFIC 226 may convert the IF signal into a 5G above6 RF signal. In case of reception, the 5G Above6 RF signal may be received from the second network 294 (e.g., the 5G network) through an antenna (e.g., the antenna 248), and may be converted into an IF signal through the third RFIC 226. The fourth RFIC 228 may convert the IF signal into a baseband signal so as to be processed by the second communication processor 214.

According to an embodiment, the first RFIC 222 and the second RFIC 224 may be implemented as at least part of a single chip or single package. According to an embodiment, the first RFFE 232 and the second RFFE 234 may be implemented as at least part of a single chip or single package. According to an embodiment, at least one antenna module, i.e., either the first antenna module 242 or the second antenna module 244, may be omitted or may be coupled with another antenna module to process RF signals of a plurality of corresponding bands.

According to an embodiment, the third RFIC 226 and the antenna 248 may be disposed to the same substrate to construct the third antenna module 246. For example, the wireless communication module 192 or the processor 120 may be disposed to a first substrate (e.g., a main PCB). In this case, the third antenna module 246 may be constructed by disposing the third RFIC 226 to a portion (e.g., a lower face) of a second substrate (e.g., a sub PCB) separated from the first substrate and by disposing the antenna 248 to another portion (e.g., an upper face). Since the third RFIC 226 and the antenna 248 are disposed to the same substrate, it is possible to decrease a length of a transmission line between them. Therefore, for example, a signal of a high-frequency band (e.g., about 6GHz to about 60GHz) used in 5G network communication may be prevented from being lost (e.g., deteriorated) by the transmission line. Accordingly, the electronic device 101 may improve quality or speed of communication with respect to the second network 294 (e.g., the 5G network).

According to an embodiment, the antenna 248 may be constructed of an antenna array including a plurality of antenna elements which may be used in beamforming. In this case, the third RFIC 226 may include a plurality of phase shifters 238 corresponding to the plurality of antenna elements, for example, as part of the third RFFE 236. In case of transmission, the plurality of phase shifters 238 may convert phases of 5G Above6 RF signals to be transmitted to the outside (e.g., a base station of the 5G network) of the electronic device 101 through respective corresponding antenna elements. In case of reception, the plurality of phase shifters 238 may convert phases of 5G Above6 RF signals received from the outside through respective corresponding antenna elements into the same or substantially same phase. Accordingly, transmission or reception is possible through beamforming between the electronic device 101 and the outside.

The second network 294 (e.g., the 5G network) may operate independently of the first network 292 (e.g., the legacy network) (e.g., Stand-Alone (SA)), or may operate in conjunction therewith (e.g., Non-Stand Alone (NSA)). For example, the 5G network may have only an access network (e.g., a 5G Radio Access Network (RAN) or Next Generation RAN (NG RAN)), and may not have a core network (e.g., a Next Generation Core (NGC)). In this case, the electronic device 101 may access the access network of the 5G network and thereafter may access an external network (e.g., the Internet) under the control of a core network (e.g., an Evolved Packed Core (EPC)) of the legacy network. Protocol information for communication with the legacy network (e.g., LTE protocol information) or protocol information for communication with the 5G network (e.g., New Radio (NR) protocol information) may be stored in the memory 130 so as to be accessed by another component (e.g., the processor 120, the first communication processor 212, or the second communication processor 214).

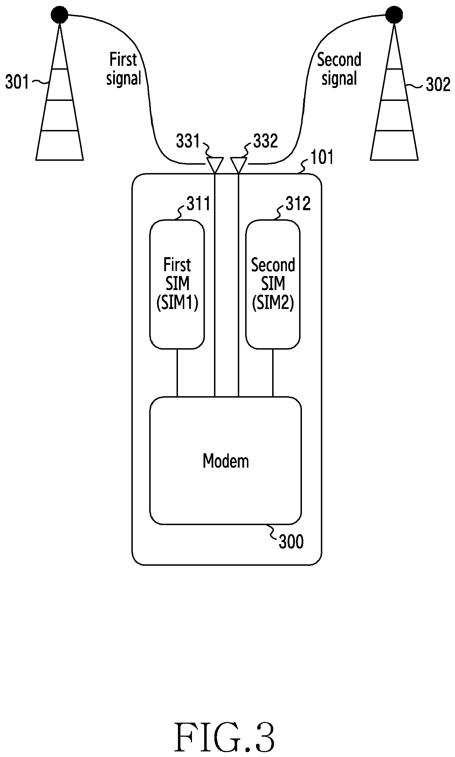

FIG. 3 is a block diagram illustrating an electronic device according to an embodiment.

Referring to FIG. 3, the electronic device 101 according to an embodiment may include a modem 300 supporting a first Subscriber Identification Module (SIM) 311 and a second SIM 312, at least one first antenna 331 electrically coupled to the modem 300 and transmitting a first signal to a first base station 301 through the first SIM 311, and at least one second antenna 332 electrically coupled to the modem 300 and transmitting a second signal to a second base station 302 through the second SIM 312.

According to an embodiment, at least one of the first antenna 331 and the second antenna 332 may be referred to as an array antenna (e.g., the antenna 248 of FIG. 2) including a plurality of antenna elements. For example, at least one of the first antenna 331 and the second antenna 332 may be referred to as an array antenna including a plurality of patch antennas. For example, at least one of the first antenna 331 and the second antenna 332 may be referred to as an array antenna which transmits a signal of a specified frequency band (e.g., an mmWave band) through a plurality of patch antennas. However, the first antenna 331 and the second antenna 332 are not restricted to the aforementioned example, and may be referred to as various types of antennas.

According to an embodiment, the electronic device 101 may use a service of a first network of a first telecommunications operator, provided from the first base station 301 through the first SIM 311. According to an embodiment, the electronic device 101 may use a service of a 5G network of the first telecommunications operator, provided from the first base station 301 through the first SIM 311. According to an embodiment, the modem 300 may support the first SIM 311 for using a service of a first 5G network provided by the first telecommunications operator.

According to an embodiment, the electronic device 101 may use a service of a second network of a second telecommunications operator, provided from the second base station 302 through the second SIM 312. According to an embodiment, the electronic device 101 may use a service of a 5G network of the second telecommunications operator, provided from the second base station 302 through the second SIM 312. According to an embodiment, the modem 300 may support the second SIM 312 for using a service of a second 5G network provided by the second telecommunications operator.

According to an embodiment, the electronic device 101 may use a service of a second 5G network through the second SIM 312 while using the service of the first 5G network through the first SIM 311.

According to an embodiment, the modem 300 may transmit a first signal to the first base station 301 through the at least one antenna 331. According to an embodiment, the modem 300 may transmit the first signal through the first antenna 331, based on information included in the first SIM 311.

According to an embodiment, the modem 300 may transmit the second signal to the second base station 302 through the at least one second antenna 332. According to an embodiment, the modem 300 may transmit the second signal through the second antenna 332, based on information included in the second SIM 312.

According to an embodiment, the modem 300 may transmit the second signal to the second base station 302 through the second antenna 332 while the first signal is transmitted to the first base station 301 through the first antenna 331. The electronic device 101 according to an embodiment may transmit the second signal to the second base station 302 through the second antenna 332 to use a network service of a second telecommunications operator supporting the second SIM 312, while the first signal is transmitted to the first base station 301 through the first antenna 331 to use the network service of a first telecommunications operator, supported by the first SIM 311. This will be described below in detail.

According to an embodiment, the first SIM 311 may include a first subscriber profile for performing authentication on a service of a 5G network provided by the first telecommunications operator. According to an embodiment, the modem 300 may perform authentication on the service of the 5G network of the first telecommunications operator by using the first subscriber profile included in the first SIM 311.

According to an embodiment, the second SIM 312 may include a second subscriber profile for performing authentication on a service of a 5G network provided by the second telecommunications operator. According to an embodiment, the modem 300 may perform authentication on the service of the 5G network of the second telecommunications operator by using the second subscriber profile included in the second SIM 312.

According to another embodiment, the first SIM 311 and the second SIM 312 may include a plurality of user profiles. An electronic device according to another embodiment may perform authentication on each of the 5G network of the first telecommunications operator and the 5G network of the second telecommunications operator, based on the plurality of user profiles included in the at least one SIM.

According to an embodiment, at least one of the first SIM 311 and the second SIM 312 may be constructed as a physical SIM (pSIM) card. The electronic device 101 according to an embodiment may include at least one slot (not shown) capable of accommodating at least one pSIM card. According to an embodiment, at least one SIM card constructed as the pSIM card out of the first SIM 311 and the second SIM 312 may be disposed to the electronic device 101 in a detachable manner by being accommodated in at least one slot.

According to an embodiment, at least one of the first SIM 311 and the second SIM 312 may be constructed as an embedded SIM (eSIM) disposed inside the electronic device 101. According to an embodiment, at least one of the first SIM 311 and the second SIM 312 may be constructed as an eSIM embedded in a Printed Circuit Board (PCB) disposed inside the electronic device 101.

For example, the first SIM 311 may be constructed as the pSIM card, and the second SIM 312 312 may be configured as the eSIM. As another example, the first SIM 311 and the second SIM 312 may be constructed as the eSIM. As another example, the first SIM 311 and the second SIM 312 may be constructed as the pSIM.

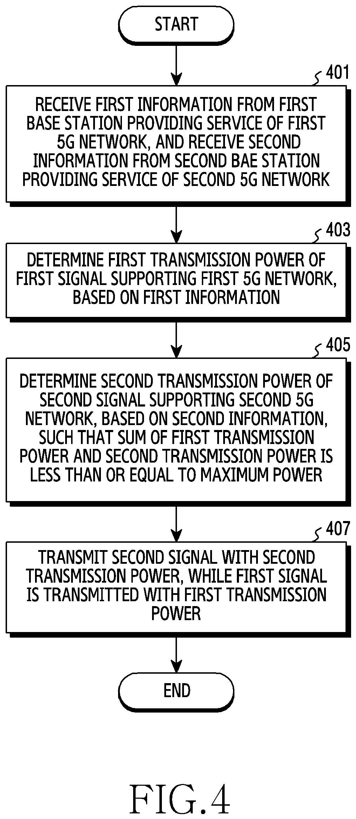

FIG. 4 is a flowchart illustrating a power control method of an electronic device according to an embodiment.

Referring to FIG. 4, the electronic device 101 according to an embodiment may use the modem 300 to determine a first transmission power of a first signal and a second transmission power of a second signal such that a specified standard is satisfied. It may be referred to that operations of FIG. 4 are performed by components of FIG. 3.

According to an embodiment, the electronic device 101 (or the modem 300) may use a first subscriber profile stored in the first SIM 311 to perform authentication on a first 5G network of a first telecommunications operator. The electronic device 101 (or the modem 300) may use a second subscriber profile stored in the second SIM 312 to perform authentication on a second 5G network of a second telecommunications operator.

According to an embodiment, in operation 401, the electronic device 101 may obtain first information from the first base station 301 which provides a first network service of the first telecommunications operator, and may obtain second information from the second base station 302 which provides a second network service of the second telecommunications operator. According to an embodiment, in operation 401, the electronic device 101 (or the modem 300) may receive the first information from the first base station 301 which provides a service of the first 5G network, and may obtain the second information from the second base station 302 which provides a service of the second 5G network. According to an embodiment, in operation 401, the electronic device 101 may receive the first information from the first base station 301 which provides the service of the first 5G network through the first SIM 311, and may obtain the second information from the second base station 302 which provides the service of the second 5G network through the second SIM 312. According to an embodiment, the service of the first 5G network may be referred to as the service of the 5G network provided by the first telecommunications operator, and the service of the second 5G network may be referred to as the service of the 5G network provided by the second telecommunications operator.

According to an embodiment, the first information and the second information may include information on power for using respective network services. For example, the first information and the second information may include resource information and/or Transmission Power Control (TPC) information. As another example, the first information and the second information may include scheduling information on a transmission period of the first signal and the second signal, respectively.

According to an embodiment, in operation 403, the electronic device 101 may determine the first transmission power of the first signal supporting the first 5G network, based on the first information. In operation 403, the electronic device 101 may determine the first transmission power of the first signal supporting the network service provided by the first telecommunications operator, based on the first information (e.g., TPC information) received through the operation 401.

According to an embodiment, the electronic device 101 may determine the first transmission power of the first signal to be less than or equal to a maximum power satisfying a Specific Absorption Rate (SAR) standard. According to another embodiment, the electronic device 101 may determine the first transmission power of the first signal to be less than or equal to the maximum power satisfying a Power Class (PC) standard (e.g., power class 3) of 3^{rd} Generation Partnership Project (3GPP).

According to an embodiment, in operation 405, the electronic device 101 may determine the second transmission power of the second signal supporting the second 5G network, based on the second information. According to an embodiment, in operation 405, based on the second information, the electronic device 101 may determine the second transmission power of the second signal supporting the second 5G network such that a sum of the first transmission power and the second transmission power is less than or equal to a predetermined maximum power.

According to an embodiment, in operation 405, the electronic device 101 may determine the second transmission power such that the sum of the first transmission power of the first signal and the second transmission power of the second signal is less than or equal to the predetermined maximum power, accumulated for a determined time, based on the second information.

According to an embodiment, the maximum power may be set to satisfy an SAR standard. According to another embodiment, the maximum power may be set to satisfy a PC standard of 3GPP. This will be described below in detail.

According to an embodiment, the electronic device 101 may include a memory (e.g., the memory 130 of FIG. 1), and the maximum power may be stored in the memory.

According to an embodiment, in operation 407, the electronic device 101 may transmit the second signal with the second transmission power, while the first signal is transmitted with the first transmission power. According to an embodiment, in operation 407, the electronic device 101 may transmit the second signal with the second transmission power through the second antenna 332 while the first signal is transmitted with the first transmission power through the first antenna 331. According to an embodiment, in operation 407, the electronic device 101 may transmit to the second base station 302 the second signal with the second transmission power through the second antenna 332 while the first signal is transmitted to the first base station 301 with the first transmission power through the first antenna 331.

According to an embodiment, by transmitting the second signal to the second base station 302 while the first signal is transmitted to the first base station 301, the electronic device 101 may use the service of the first network (e.g., the 5G network) provided by the first telecommunications operator via the first base station 301 and the service of the second network (e.g., the 5G network) provided by the second telecommunications operator via the second base station 302.

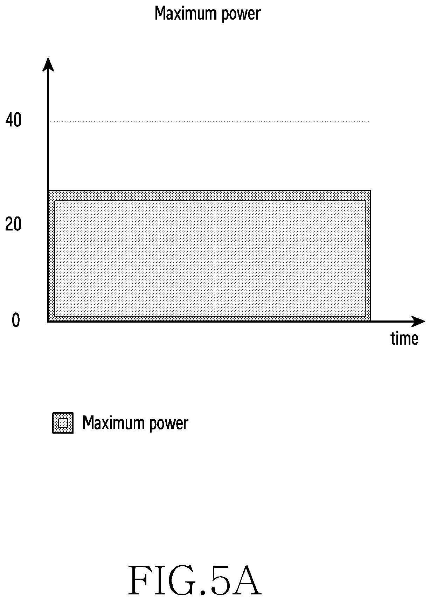

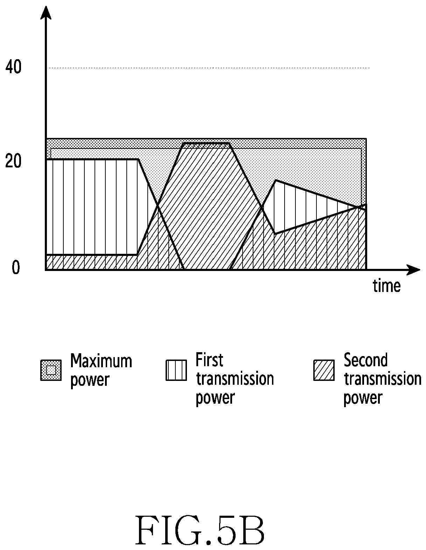

FIG. 5A illustrates a maximum power satisfying an SAR standard according to an embodiment. FIG. 5B illustrates an operation in which a sum of a first transmission power and a second transmission power is determined to be less than or equal to the maximum power of FIG. 5A according to an embodiment.

Referring to FIG. 5A and FIG. 5B together, the electronic device 101 according to an embodiment may provide control such that the sum of the first transmission power of the first signal and the second transmission power of the second signal is less than or equal to the maximum power set to satisfy the SAR standard.

Referring to FIG. 5A, the maximum power according to an embodiment may be set to satisfy the SAR standard. For example, the maximum power may be set to an amount of power which satisfies the SAR standard when accumulated for a specified time. For example, the maximum power may be set to approximately 23W per hour. As another example, the maximum power may be set to 460W for approximately 20 seconds. However, the maximum amount of power is not limited to the above example.

Referring to FIG. 5B, the electronic device 101 (or the modem 300) according to an embodiment may control the first transmission power and the second transmission power such that the sum of the first transmission power of the first signal and the second transmission power of the second signal is less than or equal to the maximum power set to satisfy the SAR standard. According to an embodiment, the electronic device 101 may determine the first transmission power of the first signal, and may determine the second transmission power of the second signal within a range in which the sum of the first transmission power and the second transmission power is less than or equal to the maximum power. For example, the electronic device 101 may determine the first transmission power of the first signal within a range of the maximum power, and may determine at least part of power excluding the first transmission power from the maximum power as the second transmission power.

For example, the electronic device 101 may control the first transmission power and/or the second transmission power such that the sum of the first transmission power of the first signal and the second transmission power of the second signal is less than or equal to approximately 23W. As another example, the electronic device 101 may control the first transmission power and/or the second transmission power such that the sum of the first transmission power of the first signal and the second transmission power of the second signal is less than or equal to approximately 460W.

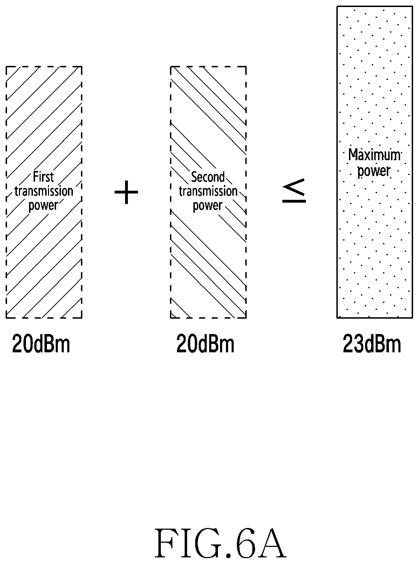

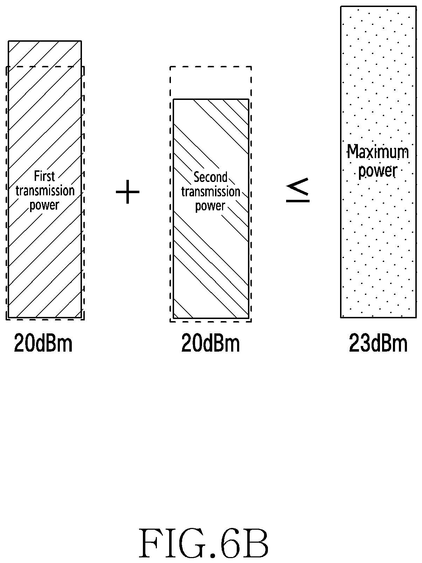

FIG. 6A illustrates a maximum power satisfying a 3GPP PC standard according to an embodiment. FIG. 6B illustrates an operation in which a sum of a first transmission power and a second transmission power is determined to be less than or equal to the maximum power of FIG. 6A according to an embodiment.

Referring to FIG. 6A and FIG. 6B, the electronic device 101 (or the modem 300) according to an embodiment may control the first transmission power and the second transmission power such that the sum of the first transmission power and the second transmission power is less than or equal to the maximum power determined to satisfy a Power Class (PC) standard of 3^{rd} Generation Partnership Project (3GPP).

According to an embodiment, the maximum power may be set to satisfy the PC3 standard of 3GPP. For example, the maximum power may be set to an amount of power which satisfies the PC3 standard of 3GPP when accumulated for a specified time. For example, the maximum power may be set to approximately 23dBm. As another example, the maximum power may be set to approximately 26dBm.

The electronic device 101 (or the modem 300) according to an embodiment may control the first transmission power and the second transmission power such that the sum of the first transmission power of the first signal and the second transmission power of the second signal is less than or equal to the maximum power predetermined to satisfy the PC standard of 3GPP. According to an embodiment, the electronic device 101 may determine the first transmission power of the first signal, and may determine the second transmission power of the second signal within a range in which the sum of the first transmission power and the second transmission power is less than or equal to the maximum power. According to an embodiment, the electronic device 101 may determine the first transmission power of the first signal within a range of the maximum power, and may determine at least part of power excluding the first transmission power from the maximum power as the second transmission power.

For example, when the electronic device 101 supports the 3GPP PC3, the electronic device 101 may control the first transmission power and/or the second transmission power such that the sum of the first transmission power of the first signal and the second transmission power of the second signal is less than or equal to approximately 23dBm. For example, the electronic device 101 may control each of the first transmission power of the first signal and the second transmission power of the second signal to be approximately 20dBm. For example, when the first transmission power of the first signal is determined to be greater than or equal to 20dBm based on first information transmitted from the first base station 310, the electronic device 101 may determine the second transmission power to be less than or equal to 20dBm such that the sum of the first transmission power and the second transmission power is less than or equal to 23dBm.

The electronic device 101 according to an embodiment may include the modem 300 supporting the first SIM 311 for using a service of a 5G network of a first telecommunications operator and the second SIM 312 for using a service of a 5G network of a second telecommunications operator, the at least one first antenna 331 electrically coupled to the modem 300 and transmitting a first signal to the first base station 301 of the first telecommunications operator through the first SIM 311, and the at least one second antenna 332 electrically coupled to the modem 300 and transmitting a second signal to the second base station 302 of the second telecommunications operator through the second SIM 312. The modem 300 may transmit the first signal to the first base station 301 with a first transmission power by using the at least one first antenna 331, and while the first signal is transmitted with the first transmission power, transmit the second signal to the second base station 302 with a second transmission power by using the at least one second antenna 302, such that a sum of the first transmission power and the second transmission power is less than or equal to a predetermined maximum power.

According to an embodiment, the maximum power may be set to satisfy a Specific Absorption Rate (SAR) standard.

According to an embodiment, the maximum power may be set to satisfy a Power Class (PC) standard of 3^{rd} Generation Partnership Project (3GPP).

According to an embodiment, the modem 300 may determine the first transmission power, based on resource information and Transmission Power Control (TPC) information received from the first base station 301.

The modem 300 according to an embodiment may determine the second transmission power, based on resource information and TPC information received from the second base station 302, within a range in which the sum with the first transmission power is less than or equal to the maximum power.

The modem 300 according to an embodiment may perform authentication on the service of the 5G network of the first telecommunications operator by using a first subscriber profile stored in the first SIM 311, and perform authentication on the service of the 5G network of the second telecommunications operator by using a second subscriber profile stored in the second SIM 312.

According to an embodiment, at least one of the first SIM 311 and the second SIM 312 may be constructed as a physical SIM card.

The electronic device 101 according to an embodiment may include a slot capable of accommodating the physical SIM card.

According to an embodiment, at least one of the first SIM 311 and the second SIM 312 may be referred to as an embedded SIM (eSIM) embedded in a Printed Circuit Board (PCB) disposed inside the electronic device 101.

According to an embodiment, the electronic device 101 may include a memory electrically coupled to the modem 300. The maximum power may be stored in the memory.

A power control method according to an embodiment may include receiving first information from the first base station 301 which provides a service of a first 5G network through the first SIM 311, and receive second information from the second base station 302 which provides a service of a second 5G network through the second SIM 312, determining a first transmission power of a first signal supporting the first 5G network, based on the first information, determining a second transmission power of a second signal supporting the second 5G network, based on the second information, such that a sum of the first transmission power and the second transmission power is less than or equal to a predetermined maximum power, and while the first signal is transmitted with the first transmission power through the first SIM 311, transmitting the second signal with the second transmission power through the second SIM 312.

According to an embodiment, the maximum power may be set to satisfy an SAR standard.

According to an embodiment, the maximum power may be set to satisfy a PC standard of 3GPP.

The power control method according to an embodiment may include performing authentication on the service of the first 5G network by using a first subscriber profile stored in the first SIM 311, and performing authentication on the service of the second 5G network by using a second subscriber profile stored in the second SIM 312.

According to an embodiment, each of the first information and the second information may include resource information and TPC information.

The electronic device 101 according to an embodiment may include the modem 300 supporting the first SIM 311 for using a service of a first 5G network and the second SIM 312 for using a service of a second 5G network, the at least one first antenna 331 electrically coupled to the modem 300 and transmitting a first signal supporting the first 5G network through the first SIM 311, and the at least one second antenna 332 electrically coupled to the modem 300 and transmitting a second signal supporting the second 5G network through the second SIM 312. When the service of the second 5G network is used through the second SIM 312 while using the service of the first 5G network through the first SIM 311, the modem 300 may transmit a first power less than or equal to a predetermined maximum power to the at least one first antenna 331, and transmit a second power to the at least one second antenna 332 such that a sum of the first power and the second power is less than or equal to the maximum power.

According to an embodiment, the maximum power may be set to satisfy an SAR standard.

According to an embodiment, the maximum power may be set to satisfy a PC standard of 3GPP.

According to an embodiment, the first power may be determined based on a first request power received from the first base station 301 of a first telecommunications operator providing the first 5G network. The second power may be determined within a range in which a sum of the first power and the second power is less than or equal to the maximum power, based on a second request power received from the second base station 302 of a second telecommunications operator providing the second 5G network.

The first SIM 311 according to an embodiment may include a first subscriber profile for performing authentication on the first 5G network. The second SIM 312 may include a second subscriber profile for performing authentication on the second 5G network.

## Claims

1. An electronic device comprising:
a modem supporting a first Subscriber Identification Module (SIM) for using a service of a 5^{th} Generation (5G) network of a first telecommunications operator and a second SIM for using a service of a 5G network of a second telecommunications operator;
at least one first antenna electrically coupled to the modem and transmitting a first signal to a first base station of the first telecommunications operator through the first SIM; and
at least one second antenna electrically coupled to the modem and transmitting a second signal to a second base station of the second telecommunications operator through the second SIM,
wherein the modem is configured to:
transmit the first signal to the first base station with a first transmission power by using the at least one first antenna; and
while the first signal is transmitted with the first transmission power, transmit the second signal to the second base station with a second transmission power by using the at least one second antenna, such that a sum of the first transmission power and the second transmission power is less than or equal to a predetermined maximum power.

2. The electronic device of claim 1, wherein the maximum power is set to satisfy a Specific Absorption Rate (SAR) standard.

3. The electronic device of claim 1, wherein the maximum power is set to satisfy a Power Class (PC) standard of 3^{rd} Generation Partnership Project (3GPP).

4. The electronic device of claim 1, wherein the modem determines the first transmission power, based on resource information and Transmission Power Control (TPC) information received from the first base station.

5. The electronic device of claim 1, wherein the modem determines the second transmission power, based on resource information and TPC information received from the second base station, within a range in which the sum with the first transmission power is less than or equal to the maximum power.

6. The electronic device of claim 1, wherein the modem is configured to:
perform authentication on the service of the 5G network of the first telecommunications operator by using a first subscriber profile stored in the first SIM; and
perform authentication on the service of the 5G network of the second telecommunications operator by using a second subscriber profile stored in the second SIM.

7. The electronic device of claim 1, wherein at least one of the first SIM and the second SIM is constructed as a physical SIM card.

8. The electronic device of claim 7, further comprising a slot capable of accommodating the physical SIM card.

9. The electronic device of claim 1, wherein at least one of the first SIM and the second SIM is an embedded SIM (eSIM) embedded in a Printed Circuit Board (PCB) disposed inside the electronic device.

10. The electronic device of claim 1, further comprising a memory electrically coupled to the modem, wherein the maximum power is stored in the memory.

11. A power control method comprising:
receiving first information from a first base station which provides a service of a first 5G network through a first SIM, and receiving second information from a second base station which provides a service of a second 5G network through a second SIM;
determining a first transmission power of a first signal supporting the first 5G network, based on the first information;
determining a second transmission power of a second signal supporting the second 5G network, based on the second information, such that a sum of the first transmission power and the second transmission power is less than or equal to a predetermined maximum power; and
while the first signal is transmitted with the first transmission power through the first SIM, transmitting the second signal with the second transmission power through the second SIM.

12. The power control method of claim 11, wherein the maximum power is set to satisfy a Specific Absorption Rate (SAR) standard.

13. The power control method of claim 11, wherein the maximum power is set to satisfy a Power Class (PC) standard of 3^{rd} Generation Partnership Project (3GPP).

14. The power control method of claim 11, further comprising:
performing authentication on the service of the first 5G network by using a first subscriber profile stored in the first SIM; and
performing authentication on the service of the second 5G network by using a second subscriber profile stored in the second SIM.

15. The power control method of claim 11, wherein each of the first information and the second information includes resource information and TPC information.
